# EUROPEAN PATENT SPECIFICATION

(11) **EP 0 590 069 B1**
(45) Date of publication and mention of the grant of the patent: **29.04.1998**
(21) Application number: 92914511.8
(22) Date of filing: 19.06.1992
(51) Int. Cl.: A23G 3/30

(54) **CHEWING GUM CONTAINING PALATINOSE AND/OR PALATINOSE OLIGOSACCHARIDE**
KAUGUMMI, DIE PALATINOSE UND/ODER PALATINOSE-OLIGOSACCHARIDE ENTHÄLT
GOMME A MACHER CONTENANT DU PALATINOSE ET/OU UN OLIGOSACCHARIDE DE PALATINOSE

(30) Priority: 19.06.1991 WO PCT/US91/04349
(43) Date of publication of application: 06.04.1994
(73) Proprietor: WM. WRIGLEY JR. COMPANY, Chicago Illinois 60611 (US)
(72) Inventor: YATKA, Robert J., Orland Park, IL 60462 (US); RICHEY, Lindell C., Lake Zurich, IL 60047 (US)
(74) Representative: Baverstock, Michael George Douglas
(86) International application number: US9205217
(87) International publication number: WO9222217

(56) References cited:
- WO-A-85/01862
- WO-A-89/07895
- WO-A-90/06061
- US-A- 4 238 510
- US-A- 4 587 119
- US-A- 4 792 453
- US-A- 4 976 972
- US-A- 4 988 518
- US-A- 5 087 460
- US-A- 5 135 761
- DATABASE WPI Derwent Publications Ltd., London, GB; AN 84-234701 & JP-A-59 140 837 (LOTTE KK)

## Description

The present invention relates to improved compositions of chewing gum. More particularly, the invention relates to improving chewing gum by the use of specific bulking agents in sugar and non-sugar chewing gum products to give improved texture, moisture absorption properties, and improved shelf-life properties. The improved chewing gum compositions may also be used in a variety of chewing gum products such as confectionery coated chewing gum products.

In recent years, efforts have been devoted to replace sugar and sugar syrups normally found in chewing gum with other carbohydrates and non-carbohydrates. Non-sugar or sugar-free chewing gum, which is growing in popularity, uses sugar alcohols or polyols to replace sugar and sugar syrups. The most popular polyols are sorbitol, mannitol, and xylitol. New polyols are being developed using new technology to replace these polyols. New polyols have various unique properties which can improve the taste, texture, and shelf-life properties of chewing gum for consumers.

The non-sugar polyols have the advantage of not contributing to dental caries of consumers, as well as being able to be consumed by diabetics. However, all polyols have the disadvantage of causing gastrointestinal disturbances if consumed in too great of a quantity. Therefore it would be a great advantage to be able to use a carbohydrate or carbohydrate-like food ingredient for chewing gum that would act as a bulking agent, but not contribute to dental caries nor cause gastrointestinal disturbances.

One such bulking agent is called palatinose or isomaltulose. This bulking agent or bulk sweetener, which is not approved for use in food products or in chewing gum in the U.S., is being considered by the US-FDA for GRAS Affirmation. The bulk sweetener is approved for use in Japan and is being used in chewing gum. Although a sugar, palatinose does not contribute to dental caries, nor does it cause gastrointestinal disturbances. Thus, this ingredient's use in chewing gum could be a definite improvement.

The manufacture of palatinose is disclosed in UK Patent No. 2,063,268, Japanese Patent No. 87-148496, and U.S. Patent No. 4,359,531.

UK Patent No. 2,066,639 discloses the replacement of sucrose with palatinose in various food products.

Combinations of palatinose with high-potency sweeteners are disclosed in EPO Publication No. 0 390 438 (using sucralose) and Japanese Patent No. 83-138355 (using aspartame).

Results of cariogenic studies of palatinose are disclosed in U.S. Patents Nos. 4,556,429; 4,587,119 and 4,695,326. Palatinose inhibits the formation of insoluble glucon from sucrose and thus reduces dental plaque.

The use of palatinose in chewing gum is disclosed in Japanese Patent No. 85-248137 and 89-019860.

Other patents disclose how bulking agents may be used in chewing gum to modify texture, flavor, and shelf-life properties.

For example, U.S. Patent No. 4,983,405 discloses the method of adding bran fiber to chewing gum to reduce calories.

U.S. Patent No. 4,980,127 discloses a high gum base, low bulking agent composition giving a low caloric, saliva stimulating chewing gum using a sodium carboxymethyl cellulose carrier.

U.S. Patent No. 4,961,935 discloses a composition of anhydrous chewing gum containing a non-hygroscopic bulking agent called palatinit, which is hydrogenated palatinose.

U.S. Patent No. 4,786,722 discloses D-Tagatose as a naturally occurring bulking agent for use in chewing gum.

U.S. Patent No. 4,765,991 discloses the use of polydextrose with a PVA base in a reduced calorie chewing gum. U.S. Patent No. 4,382,963 discloses polydextrose used in chewing gum with snack-type flavors.

PCT Publication No. 90-006317 discloses the use of crystalline lactitol monohydrate sweetener as a sugar replacement for dietetic foods, including chewing gum.

EPO Publication Nos. 0 351 972 and 0 351 973 disclose the use of sweet and non-sweet bulking agents in a savory, meat-like flavored chewing gum.

EPO Publication No. 0 325 090 discloses a sugarless anhydrous chewing gum containing maltitol.

WO90/06061 discloses modifying alitame to delay its release by means of encapsulation. It also discloses isolating alitame sweetener by means of coating it with various components one of which is palatinose. It also discloses isolating alitame and aspartame by spraying it with wax.

WO89/07895 discloses a chewing gum with improved sweetness, which improvement is achieved by employing xylitol as a rolling or dusting compound. It also discloses using palatinose in conjunction with xylitol.

The abstract of Japanese patent 59140837 discloses the incorporation aspartame with palatinose in a chewing gum composition.

The present invention provides chewing gum products containing palatinose and/or palatinose oligosaccharide and methods of making such gum products. In one embodiment there is provided a chewing gum composition comprising sweetness imparting amounts of unencapsulated aspartame and an effective amount of palatinose oligosaccharide or a mixture of palatinose oligosaccharide and palatinose to stabilize said aspartame against decomposition during storage at 29°C (85°F) for four weeks whereby at least 10% less aspartame decomposes into non-sweetening derivatives than would have decomposed if the palatinose oligosaccharide or mixture were not included in the gum composition. In a second embodiment there is provided a chewing gum composition comprising a high-intensity sweetener encapsulated with palatinose oligosaccharide. In a third embodiment a chewing gum composition comprising a flavor encapsulated with palatinose oligosaccharide. In a fourth embodiment a chewing gum product having a rolling compound comprising palatinose oligosaccharide or a mixture of palatinose oligosaccharide and palatinose. There is also provided a method of making said chewing gum product.

Even though palatinose and palatinose oligosaccharide are very similar to sucrose, they are not cariogenic, nor do they cause gastrointestinal disturbances, giving a highly consumer-acceptable chewing gum product.

FIG. 1 shows test results of aspartame stability for gum made with palatinose.

FIG. 2 shows test results of aspartame stability for gum made with sorbitol liquid and POS.

FIG. 3 shows test results of aspartame stability for gum made with HSH syrup and POS.

As used herein, the term "chewing gum" also includes bubble gum and the like. Unless otherwise specified, all percentages used herein are weight percents.

Palatinose is a carbohydrate bulking agent that is similar to sucrose, but low in sweetness intensity. Although palatinose is an isomer of sucrose, its sweetness intensity is only 42% of sucrose. Palatinose, also known as isomaltulose, is a crystalline reducing disaccharide with an α-1,6 bond between glucose and fructose. The chemical name for palatinose is 6-0-α-D-glucopyranosyl-D-fructose.

More information on palatinose can be found in Progress in Sweeteners, edited by T.H. Grenby, published by Elsevier Science Publishers, Ltd., England in 1989, Chapter 6.

Palatinose crystallizes with one water molecule per palatinose molecule, but the dehydrated form is not crystalline. Including water of crystallization, the molecular weight is 360. The melting point is 122-123°C, which is much lower than sucrose at 182°C.

The United States Food and Drug Administration is now considering palatinose under a GRAS Affirmation petition. In Japan, palatinose is considered a food item. Palatinose is being marketed in the United States by Mitsui Sugar Co., Inc. of Tokyo, Japan. It is also available from Palatinit Sussungsmittel GmbH through its U.S. representative in Elkhart, Indiana.

Palatinose is available as a crystalline material that is 99% pure with its water of crystallization. In a variety of cariogenicity tests, pure palatinose has been found to be non-cariogenic. Palatinose is also available as a palatinose syrup composed of palatinose, trehalulose, and other carbohydrates. This syrup, however, is considered low-cariogenic. Palatinose has also been polymerized to yield another similar bulking agent ingredient, called palatinose-oligosaccharide (POS). POS is considered similar to palatinose in that it is non-cariogenic. Any of these three forms of palatinose may be used in chewing gum, but the preferred form is POS when used with aspartame.

Commercially available POS, on a dry solids basis, is 48% palatinose and 50% oligosaccharides made by palatinose repolymerization with citric acid. It contains less than 5% moisture and has unique physical properties in that it is very hygroscopic, has low sweetness, has high water solubility, and is very thermostable.

Palatinose may be added to chewing gum in its crystalline/solid form or may be dissolved in water. Its solubility in water is about 30% at room temperature, but increases with increased temperature to about 65% at 80°C. Palatinose may be used in chewing gum as a texture and flavor modifier, bulking agent, and may improve texture, flavor, and shelf-life properties. Palatinose may replace solids like sucrose, dextrose, or lactose when used in its powder form, or may replace syrups when used in its liquid or syrup form. At levels of from 0.5% to 25%, palatinose or POS may replace part of the solids in sugar gum or, as a liquid, all or part of the syrup in sugar gum. At higher levels of from 25% to 90% of the gum formulation, palatinose and/or POS may replace all of the solids in a chewing gum formulation.

POS may be added to chewing gum in its powder form or dissolved in water. POS may be used as a texture and flavor modifier, bulking agent, and may improve texture, flavor and shelf-life properties. In its powder or liquid form, a sufficient quantity of POS can also stabilize aspartame. POS may replace solids like sucrose or dextrose in its powder form, or replace syrups in its liquid or syrup form. At levels above 10%, POS may replace significant quantities of sucrose and syrup. Because of its lower sweetness, aspartame may be added. It has been found that aspartame is stabilized with POS, especially when the POS is used at a level of 10% or more of the gum. In preferred embodiments, an effective amount of POS is used in gums with sweetness imparting amounts of aspartame to stabilize the aspartame against decomposition during storage at 29°C (85°F) for four weeks whereby at least 10% more aspartame remains undecomposed into non-sweetening derivatives than would have remained undecomposed if the POS were not included in the gum composition.

Although palatinose and POS are similar to sucrose and glucose polymers, their unique anti-caries properties suggest that they may be used in chewing gum formulations containing non-sugar ingredients. Non-sugar ingredients are alditols such as sorbitol, mannitol, xylitol, lactitol, palatinit (Isomalt), maltitol, and hydrogenated starch hydrolyzates. These alditols are used in a variety of combinations to develop unique sugarless chewing gum formulations. Palatinose and POS may be used to replace the individual alditols or combinations of alditols. With partial replacement of one or more alditols, palatinose or POS can be used at levels of about 0.5-25%. If palatinose and POS replace a large amount or most of the alditols, this level may be from 25% to 90% of the gum formulation.

Some sugar-free chewing gum formulations contain high levels of glycerin and are very low in moisture, i.e., less than about 2%. POS as a powder or liquid may replace part or all of the glycerin used in these types of formulations. At higher moisture levels (more than 2%) in sugar-free gum, a liquid sorbitol (70% sorbitol, 30% water) is used. When using POS, preferably sorbitol liquid should also be used to obtain soft textured gum formulations. Previous high moisture formulations containing liquid sorbitol were not made with aspartame, since the moisture caused degradation of aspartame. However, when sufficient POS (generally greater than about 10%) is added to a high moisture gum, aspartame is stabilized, and degradation is reduced or eliminated.

Recent advances use hydrogenated starch hydrolyzates (HSH) and glycerin preblended and co-evaporated to reduce moisture in some sugar-free gum formulations. Palatinose or POS may be used to replace part or all of the HSH/glycerin blends in such chewing gum formulations. Aqueous palatinose or POS solids and/or POS syrup may also replace HSH in the preblend with glycerin and be co-evaporated with glycerin to obtain a low moisture, non-crystallizable blend. Combinations of palatinose or POS solids/syrup with alditols like sorbitol, maltitol, xylitol, lactitol and mannitol in aqueous form may also be blended with glycerin and co-evaporated for use in low-moisture, sugar-free gum.

Palatinose or POS may be used in gum formulations with hydrogenated starch hydrolysates (HSH) without preblending with glycerin and coevaporation. Low levels of moisture are not necessary to prevent degradation of aspartame when POS is used, so HSH syrups at about 20-30% moisture do not need to be modified to reduce moisture to improve aspartame stability.

Palatinose or POS bulk sweetener may also be co-dried with a variety of sugars such as sucrose, dextrose, lactose, fructose, and corn syrup solids and used in a sugar-containing gum formulation. Palatinose or POS may be co-dried with a variety of alditols such as sorbitol, mannitol xylitol, maltitol, palatinit and hydrogenated starch hydrolyzates and used in a sugar-free gum formulation. Co-drying refers to methods of co-crystallization and co-precipitation of palatinose or POS with other sugars and alditols, as well as co-drying by encapsulation, agglomeration, and absorption with other sugars and alditols.

Co-drying by encapsulation, agglomeration, and absorption can also include the use of encapsulating and agglomerating agents. Palatinose or POS may be mixed with other sugars or alditols prior to being co-dried by encapsulation or agglomeration, or may be used alone with the encapsulating and agglomerating agents. These agents modify the physical properties of the bulk sweetener and control its release from chewing gum.

Three methods to obtain a controlled release of bulk sweetener are: (1) encapsulation by spray drying, fluid-bed coating, spray chilling and co-acervation to give full or partial encapsulation, (2) agglomeration to give partial encapsulation and (3) fixation or entrapment/absorption which also gives partial encapsulation. These three methods, combined in any usable manner which physically isolates the bulk sweetener, reduces its dissolvability or slows down the release of bulk sweetener, are included in this invention.

POS may act as an encapsulating or agglomerating agent. POS may also be used to absorb other ingredients. POS may be able to encapsulate, agglomerate or entrap/absorb flavors and high-intensity sweeteners like aspartame, alitame, cyclamic acid and its salts, saccharin acid and its salts, acesulfame and its salts, sucralose, dihydrochalcones, thaumatin, monellin or combinations thereof. Encapsulation of high-intensity sweeteners with POS may improve the sweetener's shelf-life.

POS may be used with other bulk sweeteners and in combination give unique properties. POS may be co-dried by various delayed release methods noted above with other bulk sweeteners like sucrose, dextrose, lactose, maltose, fructose, corn syrup solids, sorbitol, mannitol, xylitol, maltitol, palatinit® and hydrogenated starch hydrolysates for use in sugar and sugar-free chewing gum. Ingredients, including flavors, co-dried, encapsulated, agglomerated or absorbed on POS may show faster release. However, encapsulation of flavors with POS may improve the shelf-life of the flavor ingredient.

Other methods of treating the palatinose or POS bulk sweetener to physically isolate the sweetener from other chewing gum ingredients may also have some effect on its release rate and its effect on chewing gum flavor and texture. The bulk sweetener may be added to the liquid inside a liquid center gum product. The center fill of a gum product may comprise one or more carbohydrate syrups, glycerin, thickeners, flavors, acidulants, colors, sugars and sugar alcohols in conventional amounts. The ingredients are combined in a conventional manner. The bulk sweetener is dissolved in the center-fill liquid and the amount of bulk sweetener added to the center-fill liquid may be about 0.1% to about 20% by weight of the entire chewing gum formula. This method of using the bulk sweetener in chewing gum can allow for a lower usage level of the bulk sweetener, can give the bulk sweetener a smooth release rate, and can reduce or eliminate any possible reaction of the bulk sweetener with gum base, flavor components or other components, yielding improved shelf stability.

Another method of isolating the palatinose or POS bulk sweetener from other chewing gum ingredients is to add palatinose or POS to the dusting compound of a chewing gum. A rolling or dusting compound is applied to the surface of chewing gum as it is formed. This rolling or dusting compound serves to reduce sticking to machinery as it is formed, reduces sticking of the product to machinery as it is wrapped, and sticking to its wrapper after it is wrapped and being stored. The rolling compound comprises palatinose or POS bulk sweetener alone or in combination with mannitol, sorbitol, sucrose, starch, calcium carbonate, talc, other orally acceptable substances or a combination thereof. The rolling compound constitutes from 0.25% to 10.0%, but preferably from 1% to 3% of weight of the chewing gum composition. The amount of palatinose or POS sweetener added to the rolling compound is from 0.5% to 100% of the rolling compound or from 0.005% to from 5% of the chewing gum composition. This method of using palatinose or POS bulk sweetener in the chewing gum can allow a lower usage level of the bulk sweetener, can give the bulk sweetener a more controlled release rate, and can reduce or eliminate any possible reaction of the bulk sweetener with gum base, flavor components, or other components, yielding improved shelf stability.

Another method of isolating palatinose or POS sweetener is to use them in the coating/panning of a pellet chewing gum. Pellet or ball gum is prepared as conventional chewing gum, but formed into pellets that are pillow shaped or into balls. The pellets/balls can then be coated or panned by conventional panning techniques to make a unique coated pellet gum.

Conventional panning procedures generally apply a liquid coating to a pellet, which is then solidified, usually by drying the coating. The coating layer is built up by successive coating and drying steps.

Palatinose and POS are very stable and highly water soluble, and can be easily added to a sugar solution prepared for sugar panning. Palatinose may be combined with sucrose or used alone in solution as the coating on pellet gum. POS may also be added as a liquid form to the palatinose coating or any other sugar or alditol coating. Palatinose or POS can also be added as a powder blended with other powders often used in some types of conventional panning procedures. Using palatinose or POS sweetener isolates it from other gum ingredients and modifies its release rate in chewing gum. Levels of use of palatinose or POS may be from 1% to about 100% in the coating and from 0.5% to 50% of the weight of the chewing gum product. The weight of the coating may be about 20% to about 50% of the weight of the finished gum product.

Conventional panning procedures generally coat with sucrose, but recent advances in panning have allowed the use of other carbohydrate materials to be used in the place of sucrose. Some of these components include, but are not limited to, dextrose, maltose, xylitol, lactitol, palatinit and other new alditols or a combination thereof. These materials may be blended with panning modifiers including, but not limited to, gum arabic, maltodextrins, corn syrup, gelatin, cellulose derivatives like carboxymethyl cellulose or hydroxymethyl cellulose, starch and modified starches, vegetable gums like alginates, locust bean gum, guar gum, and gum tragacanth, insoluble carbonates like calcium carbonate or magnesium carbonate and talc. Antitack agents may also be added as panning modifiers which allow the use of a variety of carbohydrates and sugar alcohols to be used in the development of new panned or coated gum products. Flavors may also be added with the sugar coating and with the palatinose or POS bulk sweetener to yield unique product characteristics.

Crystalline or powdered palatinose is 99% pure and may be used alone to coat chewing gum pellets. It may be combined with panning modifiers to strengthen the resulting hard shell or used with antitack agents to reduce sticking. Panning tests have shown crystalline palatinose obtained from Mitsui Sugar Co. of Japan is slightly tacky for coating. There are two possible reasons for this. First, other saccharide impurities may cause palatinose to be tacky, and slow its crystallization during coating. If this were the reason, a more pure palatinose would be easy to use to make a coated pellet gum. Secondly, upon being dried from an aqueous solution, as previously noted, palatinose forms a monohydrate. Thus, during the coating operation, the palatinose may dry to a monohydrate initially, then release its moisture later. This is easily overcome by not allowing previous coatings to completely dry between applications of liquid palatinose syrup. After the final coatings are applied, further drying is done by holding pellets in open containers to allow complete crystallization and formation of a hard shell. This is very similar to procedures used for dextrose panning.

Another method to improve coating processes using palatinose is to add a powder coating after a liquid coating. The powder coating may include palatinose, POS, maltodextrin, gelatin, cellulose derivatives, starches, modified starches, vegetable gums, and fillers like talc and calcium carbonate. This will reduce stickiness and allow a faster build-up of coating.

POS may be used in combination with powdered palatinose in a liquid syrup to coat pellet gum. POS may also be used as a panning modifier with other sugar and sugar alcohol syrups such as dextrose, sucrose, xylitol, and palatinit. POS may act as a binder to, and film former for, the sugar or sugar alcohol coating.

The previously described palatinose or POS bulk sweetener may readily be incorporated into a chewing gum composition. The remainder of the chewing gum ingredients are noncritical to the present invention. That is, the bulk sweetener can be incorporated into conventional chewing gum formulations in a conventional manner. The palatinose or POS bulk sweeteners may be used in a sugar-free or sugar chewing gum to modify the sweetness thereof. The bulk sweetener may be used in either regular chewing gum or bubble gum.

In general, a chewing gum composition typically comprises a water-soluble bulk portion, a water-insoluble chewable gum base portion and typically water-insoluble flavoring agents. The water-soluble portion dissipates with a portion of the flavoring agent over a period of time during chewing. The gum base portion is retained in the mouth throughout the chew.

The insoluble gum base generally comprises elastomers, resins, fats and oils, waxes, softeners and inorganic fillers. Elastomers may include polyisobutylene, isobutylene-isoprene copolymer and styrene butadiene rubber, as well as natural latexes such as chicle. Resins include polyvinylacetate and terpene resins. Fats and oils may also be included in the gum base, including tallow, hydrogenated and partially hydrogenated vegetable oils, and cocoa butter. Commonly employed waxes include paraffin, microcrystalline and natural waxes such as beeswax and carnauba. According to the preferred embodiment of the present invention, the insoluble gum base constitutes between from 5 to 95% by weight of the gum. More preferably the insoluble gum base comprises between 10 and 50 percent by weight of the gum and most preferably from 20 to 35% by weight of the gum.

The gum base typically also includes a filler component. The filler component may be calcium carbonate, magnesium carbonate, talc, dicalcium phosphate or the like. The filler may constitute between about 5 and about 60% by weight of the gum base. Preferably, the filler comprises about 5 to about 50% by weight of the gum base.

Gum bases typically also contain softeners, including glycerol monostearate and glycerol triacetate. Further, gum bases may also contain optional ingredients such as antioxidants, colors, and emulsifiers. The present invention contemplates employing any commercially acceptable gum base.

The water-soluble portion of the chewing gum may further comprise softeners, sweeteners, flavoring agents and combinations thereof. The sweeteners often fill the role of bulking agents in the gum. The bulking agents generally comprise from 5% to 90%, preferably from 20% to 80%, and most preferably from 30% to 60% of the gum.

Softeners are added to the chewing gum in order to optimize the chewability and mouth feel of the gum. Softeners, also known in the art as plasticizers or plasticizing agents, generally constitute between from 0.5 to 15.0% by weight of the chewing gum. Softeners contemplated by the present invention include glycerin, lecithin, and combinations thereof. Further, aqueous sweetener solutions such as those containing sorbitol, hydrogenated starch hydrolysates, corn syrup and combinations thereof may be used as softeners and binding agents in gum.

As mentioned above, the palatinose or POS bulk sweetener of the present invention will most likely be used in sugar gum formulations. However, sugar-free formulations are also within the scope of the invention. Sugar sweeteners generally include saccharide-containing components commonly known in the chewing gum art which comprise, but are not limited to, sucrose, dextrose, maltose, dextrin, dried invert sugar, fructose, levulose, galactose, corn syrup solids and the like, alone or in any combination.

The palatinose or POS bulk sweetener of the present invention can also be used in combination with sugarless sweeteners. Generally sugarless sweeteners include components with sweetening characteristics but which are devoid of the commonly known sugars and comprise, but are not limited to, sugar alcohols such as sorbitol, mannitol, xylitol, hydrogenated starch hydrolysates, maltitol and the like, alone or in any combination.

Depending on the particular sweetness release profile and shelf-stability needed, the palatinose or POS solid/syrup bulk sweeteners of the present invention can also be used in combination with coated or uncoated high-potency sweeteners or with high-potency sweeteners coated with other materials and by other techniques.

A flavoring agent may be present in the chewing gum in an amount within the range of from about 0.1 to about 10.0 weight percent and preferably from about 0.5 to about 3.0 weight percent of the gum. The flavoring agents may comprise essential oils, synthetic flavors, or mixture thereof including, but not limited to, oils derived from plants and fruits such as citrus oils, fruit essences, peppermint oil, spearmint oil, clove oil, oil of wintergreen, anise, and the like. Artificial flavoring components are also contemplated for use in gums of the present invention. Those skilled in the art will recognize that natural and artificial flavoring agents may be combined in any sensorially acceptable blend. All such flavors and flavor blends are contemplated by the present invention.

Optional ingredients such as colors, emulsifiers and pharmaceutical agents may be added to the chewing gum.

In general, chewing gum is manufactured by sequentially adding the various chewing gum ingredients to a commercially available mixer known in the art. After the ingredients have been thoroughly mixed, the gum mass is discharged from the mixer and shaped into the desired form such as by rolling into sheets and cutting into sticks, extruding into chunks or casting into pellets.

Generally, the ingredients are mixed by first melting the gum base and adding it to the running mixer. The base may also be melted in the mixer itself. Color or emulsifiers may also be added at this time. A softener such as glycerin may also be added at this time, along with any syrup and a portion of the bulking agent/sweetener. Further portions of the bulking agent/sweetener may then be added to the mixer. A flavoring agent is typically added with the final portion of the bulking agent. Any high-intensity sweetener used is preferably added after the final portion of bulking agent and flavor have been added.

The entire mixing procedure typically takes from five to fifteen minutes, but longer mixing times may sometimes be required. Those skilled in the art will recognize that many variations of the above described procedure may be followed.

### Examples

The following examples of the invention and comparative examples are provided by way of explanation and illustration.

The formulas listed in Table 1 comprise various sugar-type formulas in which POS can be added to gum after it is dissolved in water and mixed with various aqueous solvents. Aspartame (APM), which can be stabilized with POS, may also be added to the formula. Generally, APM is added to the gum at a level of from 0.005% to 1% of the gum composition.

**TABLE 1**

| (WEIGHT PERCENT) | | | | | | | | |
|---|---|---|---|---|---|---|---|---|
| | EX. 1 | EX. 2 | EX. 3 | EX. 4 | EX. 5 | EX. 6 | EX. 7 | EX. 8 |
| SUGAR | 55.6 | 56.6 | 55.6 | 47.0 | 53.0 | 53.0 | 55.5 | 47.0 |
| BASE | 19.2 | 19.2 | 19.2 | 19.2 | 19.2 | 19.2 | 19.2 | 19.2 |
| CORN SYRUP | 12.8 | 1.8 | 8.8 | 2.8 | 6.8 | 6.8 | 0.0 | 2.8 |
| PEPPERMINT FLAVOR | 0.9 | 0.9 | 0.9 | 0.9 | 0.9 | 0.9 | 0.9 | 0.9 |
| GLYCERIN | 1.4 | 1.4 | 1.4 | 0.0 | 0.0 | 0.0 | 1.4 | 0.0 |
| LIQUID/POS BLEND | 10.0 | 20.0 | 14.0 | 30.0 | 20.0 | 20.0 | 22.9 | 30.0 |
| APM | 0.1 | 0.1 | 0.1 | 0.1 | 0.1 | 0.1 | 0.1 | 0.1 |

### EXAMPLE 1

POS powder can be added directly to the gum.

### EXAMPLE 2

An 80 gram portion of POS can be dissolved in 120 grams of water at 40°C making a 40% solution and added to gum.

### EXAMPLE 3

POS syrup at 70% solids can be added directly to the gum.

### EXAMPLE 4

A blend of 80 grams of POS and 120 grams of water is mixed at 40°C. To this is added 100 grams of glycerin to give a mixture of 27% POS, 40% water, and 33% glycerin, and added to gum.

### EXAMPLE 5

To 140 grams of POS syrup at 70% solids is added 60 grams of glycerin to give a 70% POS syrup with 30% glycerin, and added to gum.

### EXAMPLE 6

To 140 grams of POS syrup of 70% solids is added 60 grams of propylene glycol giving a 70% POS syrup with 30% glycerin and added to gum.

### EXAMPLE 7

To 140 grams of POS syrup at 70% solids is added 89 grams of corn syrup and blended giving a mixture of 61% POS syrup and 39% corn syrup.

### EXAMPLE 8

To a 200 gram quantity of corn syrup is added 100 grams of glycerin. To this mixture is added 75 grams of POS and blended at 50°C. This mixture is added to gum.

In the next examples of sugar gum formulations, POS can be dissolved in water and emulsifiers can be added to the aqueous solution. Example solutions can be prepared by dissolving 15 grams of POS in 70 grams water and adding 15 grams of emulsifiers of various hydrophilic-lipophilic balance (HLB) values to the solution. The mixtures can then be used in the following formulas.

**TABLE 2**

| (WEIGHT PERCENT) | | | | | | |
|---|---|---|---|---|---|---|
| | EX. 9 | EX. 10 | EX. 11 | EX. 12 | EX. 13 | EX. 14 |
| SUGAR | 50.7 | 50.7 | 50.7 | 50.7 | 50.7 | 50.7 |
| BASE | 19.2 | 19.2 | 19.2 | 19.2 | 19.2 | 19.2 |
| CORN SYRUP | 12.8 | 12.8 | 12.8 | 12.8 | 12.8 | 12.8 |
| GLYCERIN | 1.4 | 1.4 | 1.4 | 1.4 | 1.4 | 1.4 |
| DEXTROSE MONOHYDRATE | 9.9 | 9.9 | 9.9 | 9.9 | 9.9 | 9.9 |
| PEPPERMINT FLAVOR | 0.9 | 0.9 | 0.9 | 0.9 | 0.9 | 0.9 |
| APM | 0.1 | 0.1 | 0.1 | 0.1 | 0.1 | 0.1 |
| BULK SWEETENER/EMULSIFIER/WATER MIXTURE | 5.0 | 5.0 | 5.0 | 5.0 | 5.0 | 5.0 |
| | None | HLB=2 | HLB=4 | HLB=6 | HLB=9 | HLB=12 |

### EXAMPLES 15-20

The same as the formulations made in Examples 9-14, respectively, except that the flavor can be mixed together with the aqueous bulk sweetener solution and emulsified before adding the mixture to the gum batch.

The following Tables 3 through 10 are examples of gum formulations that demonstrate formula variations in which palatinose oligosaccharides (POS) may be used. Formulas with high levels of POS may also contain aspartame (APM) which is stabilized with POS.

Examples 21-25 in Table 3 demonstrate the use of POS in low moisture sugar formulations showing less than 2% theoretical moisture:

**TABLE 3**

| (WEIGHT PERCENT) | | | | | |
|---|---|---|---|---|---|
| | EX. 21 | EX. 22 | EX. 23 | EX. 24 | EX. 25 |
| SUGAR | 57.9 | 53.9 | 48.9 | 25.0 | 0.0 |
| GUM BASE | 19.2 | 19.2 | 19.2 | 19.2 | 19.2 |
| CORN SYRUP^{a} | 6.0 | 6.0 | 6.0 | 6.0 | 6.0 |
| DEXTROSE MONOHYDRATE | 10.0 | 10.0 | 10.0 | 10.0 | 10.0 |
| LACTOSE | 0.0 | 0.0 | 0.0 | 5.0 | 5.0 |
| GLYCERIN^{b} | 5.0 | 5.0 | 4.9 | 8.7 | 8.6 |
| FLAVOR | 0.9 | 0.9 | 0.9 | 0.9 | 0.9 |
| POS | 1.0 | 5.0 | 10.0 | 25.0 | 50.0 |
| APM | - | - | 0.1 | 0.2 | 0.3 |

| | | | | | |
|---|---|---|---|---|---|
| ^{a}Corn Syrup is evaporated to 85% solids, 15% moisture | | | | | |
| ^{b}Glycerin and syrup may be blended and co-evaporated | | | | | |

Examples 26-30 in Table 4 demonstrate the use of POS in medium-moisture sugar formulations having about 2% to about 5% moisture.

Examples 31-35 in Table 5 demonstrate the use of POS in high-moisture sugar formulations having more than about 5% moisture.

**TABLE 4**

| (WEIGHT PERCENT) | | | | | |
|---|---|---|---|---|---|
| | EX. 26 | EX. 27 | EX. 28 | EX. 29 | EX. 30 |
| SUGAR | 52.5 | 48.5 | 43.5 | 25.0 | 0.0 |
| GUM BASE | 19.2 | 19.2 | 19.2 | 19.2 | 19.2 |
| CORN SYRUP^{a} | 15.0 | 15.0 | 14.9 | 18.3 | 18.2 |
| DEXTROSE MONOHYDRATE | 10.0 | 10.0 | 10.0 | 10.0 | 10.0 |
| GLYCERIN^{b} | 1.4 | 1.4 | 1.4 | 1.4 | 1.4 |
| FLAVOR | 0.9 | 0.9 | 0.9 | 0.9 | 0.9 |
| POS | 1.0 | 5.0 | 10.0 | 25.0 | 50.0 |
| APM | - | - | 0.1 | 0.2 | 0.3 |

| | | | | | |
|---|---|---|---|---|---|
| ^{a}Corn Syrup is evaporated to 85% solids, 15% moisture | | | | | |
| ^{b}Glycerin and syrup may be blended and co-evaporated | | | | | |

**TABLE 5**

| (WEIGHT PERCENT) | | | | | |
|---|---|---|---|---|---|
| | EX. 31 | EX. 32 | EX. 33 | EX. 34 | EX. 35 |
| SUGAR | 50.0 | 46.0 | 41.0 | 25.0 | 0.0 |
| GUM BASE | 24.0 | 24.0 | 24.0 | 24.0 | 24.0 |
| CORN SYRUP | 24.0 | 24.0 | 23.9 | 24.4 | 24.3 |
| GLYCERIN | 0.0 | 0.0 | 0.0 | 0.4 | 0.4 |
| FLAVOR | 1.0 | 1.0 | 1.0 | 1.0 | 1.0 |
| POS | 1.0 | 5.0 | 10.0 | 25.0 | 50.0 |
| APM | - | - | 0.1 | 0.2 | 0.3 |

Examples 36-40 in Table 6 and Examples 41-50 in Tables 7 and 8 demonstrate the use of POS in low- and high-moisture gums that are sugar-free. Low-moisture gums have less than about 2% moisture, and high-moisture gums have greater than 2% moisture.

**TABLE 6**

| (WEIGHT PERCENT) | | | | | |
|---|---|---|---|---|---|
| | EX. 36 | EX. 37 | EX. 38 | EX. 39 | EX. 40 |
| BASE | 25.5 | 25.5 | 25.5 | 25.5 | 25.5 |
| SORBITOL | 50.0 | 46.0 | 41.0 | 26.0 | 0.0 |
| MANNITOL | 12.0 | 12.0 | 12.0 | 12.0 | 13.0 |
| GLYCERIN | 10.0 | 10.0 | 9.9 | 9.8 | 9.7 |
| FLAVOR | 1.5 | 1.5 | 1.5 | 1.5 | 1.5 |
| POS | 1.0 | 5.0 | 10.0 | 25.0 | 50.0 |
| APM | - | - | 0.1 | 0.2 | 0.3 |

**TABLE 7**

| (WEIGHT PERCENT) | | | | | |
|---|---|---|---|---|---|
| | EX. 41 | EX. 42 | EX. 43 | EX. 44 | EX. 45 |
| BASE | 25.5 | 25.5 | 25.5 | 25.5 | 25.5 |
| SORBITOL | 50.0 | 46.0 | 41.0 | 26.0 | 0.0 |
| LIQUID SORBITOL* | 10.0 | 10.0 | 10.0 | 10.0 | 11.0 |
| MANNITOL | 10.0 | 10.0 | 10.0 | 10.0 | 10.0 |
| GLYCERIN | 2.0 | 2.0 | 1.9 | 1.8 | 1.7 |
| FLAVOR | 1.5 | 1.5 | 1.5 | 1.5 | 1.5 |
| POS | 1.0 | 5.0 | 10.0 | 25.0 | 50.0 |
| APM | - | - | 0.1 | 0.2 | 0.3 |

| | | | | | |
|---|---|---|---|---|---|
| * Sorbitol liquid contains 70 % sorbitol, 30 % water | | | | | |

**TABLE 8**

| (WEIGHT PERCENT) | | | | | |
|---|---|---|---|---|---|
| | EX. 46 | EX. 47 | EX. 48 | EX. 49 | EX. 50 |
| BASE | 25.5 | 25.5 | 25.5 | 25.5 | 25.5 |
| SORBITOL | 50.0 | 46.0 | 41.0 | 26.0 | 0.0 |
| HSH SYRUP* | 10.0 | 10.0 | 10.0 | 10.0 | 10.0 |
| MANNITOL | 8.0 | 8.0 | 7.9 | 7.8 | 8.7 |
| GLYCERIN** | 4.0 | 4.0 | 4.0 | 4.0 | 4.0 |
| FLAVOR | 1.5 | 1.5 | 1.5 | 1.5 | 1.5 |
| POS | 1.0 | 5.0 | 10.0 | 25.0 | 50.0 |
| APM | - | - | 0.1 | 0.2 | 0.3 |

| | | | | | |
|---|---|---|---|---|---|
| * Hydrogenated starch hydrolyzole syrup | | | | | |
| ** Glycerin and HSH syrup may be blended or co-evaporated | | | | | |

Table 9 shows sugar chewing gum formulations that can be made with various other types of sugars.

**TABLE 9**

| (WEIGHT PERCENT) | | | | | | |
|---|---|---|---|---|---|---|
| | EX. 51 | EX. 52 | EX. 53 | EX. 54 | EX. 55 | EX. 56 |
| GUM BASE | 19.2 | 19.2 | 19.2 | 19.2 | 19.2 | 19.2 |
| SUCROSE | 44.4 | 24.2 | 39.4 | 19.2 | 29.4 | 19.2 |
| GLYCERIN | 1.4 | 1.4 | 1.4 | 1.4 | 1.4 | 1.4 |
| CORN SYRUP | 14.0 | 14.0 | 14.0 | 14.0 | 14.0 | 14.0 |
| DEXTROSE | 5.0 | 5.0 | - | - | 10.0 | 5.0 |
| LACTOSE | 5.0 | 5.0 | 10.0 | 10.0 | - | - |
| FRUCTOSE | 5.0 | 5.0 | 10.0 | 10.0 | 10.0 | 5.0 |
| INVERT SUGAR | - | - | - | - | 10.0 | 10.0 |
| MALTOSE | - | - | - | - | - | - |
| CORN SYRUP SOLIDS | - | - | - | - | - | - |
| PEPPERMINT FLAVOR | 0.9 | 0.9 | 0.9 | 0.9 | 0.9 | 0.9 |
| POS | 5.0 | 25.0 | 5.0 | 25.0 | 5.0 | 25.0 |
| APM | 0.1 | 0.3 | 0.1 | 0.3 | 0.1 | 0.3 |

| | EX.57 | EX.58 | EX.59 | EX.60 | EX.61 | EX.62 |
|---|---|---|---|---|---|---|
| GUM BASE | 19.2 | 19.2 | 19.2 | 19.2 | 19.2 | 19.2 |
| SUCROSE | 29.4 | 19.2 | 29.4 | 19.2 | 37.4 | 22.2 |
| GLYCERIN | 1.4 | 1.4 | 1.4 | 1.4 | 1.4 | 1.4 |
| CORN SYRUP | 14.0 | 14.0 | 14.0 | 14.0 | 11.0 | 11.0 |
| DEXTROSE | 10.0 | 5.0 | 10.0 | 5.0 | 10.0 | 5.0 |
| LACTOSE | - | - | - | - | - | - |
| FRUCTOSE | 10.0 | 5.0 | 10.0 | 5.0 | 5.0 | 5.0 |
| INVERT SUGAR | 10.0 | 10.0 | - | - | 5.0 | 5.0 |
| MALTOSE | - | - | 10.0 | 10.0 | - | - |
| CORN SYRUP SOLIDS | - | - | - | - | 5.0 | 5.0 |
| PEPPERMINT FLAVOR | 0.9 | 0.9 | 0.9 | 0.9 | 0.9 | 0.9 |
| POS | 5.0 | 25.0 | 5.0 | 25.0 | 5.0 | 25.0 |
| APM | 0.1 | 0.3 | 0.1 | 0.3 | 0.1 | 0.3 |

Any of the sugars may be combined with POS and co-dried to form unique combinations such as:

### EXAMPLES 63

Dextrose and POS can be dissolved in water in a 2:1 ratio dextrose:POS and co-dried or co-precipitated and used in the formulas in Table 9.

### EXAMPLE 64

POS and sucrose can be dissolved in water in a 1:1 ratio and co-dried or co-precipitated and used in the formulas in Table 9.

### EXAMPLE 65

POS, sucrose, and dextrose can be dissolved in water in a 1:1:1 ratio and co-dried or co-precipitated and used in the formulas in Table 9.

### EXAMPLE 66

POS, sucrose, dextrose, and fructose can be dissolved in water at 25% of each ingredient and co-dried, and used in the formulas in Table 9.

### EXAMPLE 67

POS, dextrose, fructose, and lactose can be dissolved in water at 25% of each ingredient and co-dried, and used in the formulas in Table 9.

### EXAMPLE 68

POS, dextrose, maltose, and corn syrup solids can be dissolved in water at 25% of each ingredient and co-dried, and used in the formulas in Table 9.

### EXAMPLE 69

POS, sucrose, dextrose, maltose and fructose can be dissolved in water at 20% of each ingredient and co-dried, and used in the formulas in Table 9.

Multiple combinations of POS with other sugars can be made in solution to form liquid concentrates that do not need to be co-dried, such as:

### EXAMPLE 70

POS, corn syrup and glycerin can be dissolved in water at a ratio of 1:1:1, evaporated to a thick syrup and used in the formulas in Table 9.

### EXAMPLE 71

POS, dextrose, fructose, invert syrup may be dissolved in water at 25% of each ingredient and evaporated to a thick syrup and used in the formulas in Table 9.

### EXAMPLE 72

POS, dextrose, maltose, and corn syrup solids may be dissolved in water at 25 % of each component and evaporated to a thick syrup and used in the formulas in Table 9.

### EXAMPLE 73

Glycerin is added to Example 71 at a ratio of 4:1 syrup to glycerin and evaporated to a thick syrup, and used in the formulas in Table 9.

### EXAMPLE 74

Glycerin is added to Example 72 at a ratio of 2:1 syrup to glycerin and evaporated to a thick syrup, and used in the formulas in Table 9.

Table 10 shows chewing gum formulations that are free of sugar. These formulations can use a wide variety of non-sugar alditols, including Lycasin brand HSH syrup.

**TABLE 10**

| (WEIGHT PERCENT) | | | | | | |
|---|---|---|---|---|---|---|
| | EX. 75 | EX. 76 | EX. 77 | EX. 78 | EX. 79 | EX. 80 |
| GUM BASE | 25.5 | 25.5 | 25.5 | 25.5 | 25.5 | 25.5 |
| GLYCERIN | 1.9 | 1.7 | 1.9 | 1.7 | 1.9 | 1.7 |
| SORBITOL | 44.0 | 14.0 | 34.0 | 9.0 | 28.0 | - |
| MANNITOL | - | 10.0 | 10.0 | 10.0 | 10.0 | 6.0 |
| SORBITOL LIQUID | 17.0 | 17.0 | - | - | - | - |
| LYCASIN (Trade Mark) | - | - | 17.0 | 12.0 | 8.0 | 10.0 |
| MALTITOL | - | - | - | 10.0 | - | - |
| XYLITOL | - | - | - | - | 15.0 | 15.0 |
| LACTITOL | - | - | - | - | - | - - |
| PALATINIT (Trade Mark) | - | - | - | - | - | - |
| FLAVOR | 1.5 | 1.5 | 1.5 | 1.5 | 1.5 | 1.5 |
| POS | 10.0 | 30.0 | 10.0 | 30.0 | 10.0 | 40.0 |
| APM | 0.1 | 0.3 | 0.1 | 0.3 | 0.1 | 0.3 |

| | EX. 81 | EX. 82 | EX. 83 | EX. 84 | EX. 85 | EX. 86 |
|---|---|---|---|---|---|---|
| GUM BASE | 25.5 | 25.5 | 25.5 | 25.5 | 25.5 | 25.5 |
| GLYCERIN | 7.9 | 7.7 | 7.9 | 1.7 | 2.7 | 1.7 |
| SORBITOL | 32.0 | 7.0 | 22.0 | 11.0 | 10.0 | - |
| MANNITOL | 8.0 | 8.0 | 8.0 | - | - | - |
| SORBITOL LIQUID | 5.0 | - | - | - | - | - |
| LYCASIN | - | 5.0 | 5.0 | 5.0 | 10.0 | 10.0 |
| MALTITOL | - | 5.0 | - | - | - | - |
| XYLITOL | - | - | - | 15.0 | - | - |
| LACTITOL | 10.0 | 10.0 | 10.0 | - | - | - |
| PALATINIT | - | - | 10.0 | 10.0 | 25.0 | 21.0 |
| FLAVOR | 1.5 | 1.5 | 1.5 | 1.5 | 1.5 | 1.5 |
| POS | 10.0 | 30.0 | 10.0 | 30.0 | 25.0 | 40.0 |
| APM | 0.1 | 0.3 | 0.1 | 0.3 | 0.3 | 0.3 |

Any of the alditols can be combined with POS and co-dried to form unique combinations, such as:

### EXAMPLE 87

POS and sorbitol can be dissolved in water in a ratio of 2:1 sorbitol:POS and co-dried and used in formulas in Table 10.

### EXAMPLE 88

POS, sorbitol, and mannitol can be dissolved in water at a ratio of 1:1:1, co-dried, and used in appropriate formulas in Table 10.

### EXAMPLE 89

POS, mannitol and xylitol can be dissolved in water at a ratio of 1:1:1, co-dried, and used in appropriate formulas in Table 10.

### EXAMPLE 90

POS, sorbitol, and lactitol can be dissolved in water at a ratio of 1:1:1, co-dried, and used in appropriate formulas in Table 10.

### EXAMPLE 91

POS, palatinit, and sorbitol can be dissolved in water at a ratio of 1:1:1, co-dried, and used in appropriate formulas in Table 10.

### EXAMPLE 92

POS and palatinit can be dissolved in water at a ratio of 1:1, co-dried, and used in appropriate formulas in Table 10.

### EXAMPLE 93

POS, sorbitol, maltitol, and xylitol may be blended at 25% of each ingredient and dissolved in water, co-dried, and used in appropriate formulas in Table 10.

Multiple combinations of palatinose with the various alditols can be made in solution to form liquid concentrates that do not need to be co-dried, such as:

### EXAMPLE 94

POS, sorbitol, maltitol, and Lycasin® may be dissolved in water at 25% of each ingredient, evaporated to a thick syrup and used in the appropriate formulas in Table 10.

### EXAMPLE 95

POS, xylitol, sorbitol, and Lycasin can be dissolved in water at 25% of each ingredient, evaporated to a thick syrup, and used in the formulas in Table 10.

### EXAMPLE 96

POS, sorbitol, lactitol, and Lycasin can be dissolved in water at 25% of each ingredient, evaporated to a thick syrup, and used in the formulas in Table 10.

### EXAMPLE 97

POS, Lycasin and glycerin can be dissolved in water at a ratio of 1:1:1, evaporated to a thick syrup and used in the formulas in Table 10.

### EXAMPLE 98

Glycerin is added to Example 94 at a ratio of 4:1 syrup to glycerin, evaporated to a thick syrup, and used in formulas in Table 10.

### EXAMPLE 99

Glycerin is added to Example 95 at a ratio of 4:1 syrup to glycerin, evaporated to a thick syrup, and used in the formulas in Table 10.

### EXAMPLE 100

Glycerin is added to Example 96 at a ratio of 4:1 syrup to glycerin, evaporated to a thick syrup, and used in formulas in Table 10.

Other high-intensity sweeteners such as acesulfame K, or the salts of acesulfame, cyclamate and its salts, saccharin and its salts, alitame, sucralose, thaumatin, monellin, dihydrochalcone, stevioside, glycyrrhizin, and combinations thereof may be used in any of the Examples listed in Tables 3, 4, 5, 6, 7, 8 9 and 10. Since POS has less sweetness than some of the other sugars used in sugar gum, and some of the alditols in sugar-free gum, a high-intensity sweetener may be need to obtain the proper level of sweetness.

High-intensity sweeteners may also be modified to control their release in chewing gum formulations containing POS. This can be controlled by various methods of encapsulation, agglomeration, absorption, or a combination of methods to obtain either a fast or slow release of the sweetener. Sweetener combinations, some of which may be synergistic, may also be included in the gum formulations containing POS.

The following examples show the use of high-intensity sweeteners in chewing gum formulations with POS.

### EXAMPLE 101

Alitame at a level of 0.03% may be added to any of the formulas in Tables 3 through 10 by replacing 0.03% of the POS.

### EXAMPLE 102

Sucralose at a level of 0.07% may be added to any of the formulas in Tables 3 through 10 by replacing 0.07% of the POS.

### EXAMPLE 103

Thaumatin at a level of 0.02% may be added to any of the formulas in Tables 3 through 10 by replacing 0.02% of the POS.

### EXAMPLE 104

Glycyrrhizin at a level of 0.4% may be added to any of the formulas in Tables 3 through 10 by replacing 0.4% of the POS.

High-intensity sweeteners may also be combined with other high-intensity sweeteners, with or without encapsulation, agglomeration or absorption, and used in chewing gum. Examples are:

### EXAMPLE 105

Aspartame and acesulfame K at a 1:1 ratio may be added to any of the formulas in Tables 3 through 10 at a level of 0.15% by replacing 0.15% of the POS.

### EXAMPLE 106

Aspartame and alitame at a ratio of 9:1 aspartame: alitame may be added to any of the formulas in Tables 3 through 10 at a level of 0.1% by replacing 0.1% of the POS.

### EXAMPLE 107

Aspartame and thaumatin at a ratio of 9:1 aspartame:thaumatin can be added to any of the formulas in Tables 3 through 10 at a level of 0.1% by replacing 0.1% of the POS.

### EXAMPLE 108

Sucralose (Trade Mark) and alitame in a ratio of 3:1 sucralose (Trade Mark): alitame can be added to any of the formulas in Tables 3 through 10 at a level of 0.5% by replacing 0.5% of the POS.

### EXAMPLE 109

Alitame and glycyrrhizin in a ratio of 1:12 alitame:glycyrrhizin can be added to any of the formulas in Tables 3 through 10 at a level of 0.1% by replacing 0.1% of the POS.

### EXAMPLE 110

Aspartame and glycyrrhizin in a ratio of 1:14 aspartame:glycyrrhizin can be added to any of the formulas in Tables 3 through 10 at a level of 0.3% by replacing 0.3% of the POS.

As discussed above, the three types of palatinose ingredients that are available are palatinose crystalline, palatinose syrup, and palatinose-oligosaccharide (POS). These materials may be used exclusively in a variety of chewing gum formulations, as in Tables 11 and 12. The formulas with POS and APM will show improved APM stability.

**TABLE 11**

| (WEIGHT PERCENT) | | | | | |
|---|---|---|---|---|---|
| | EX. 111 | EX. 112 | EX. 113 | EX. 114 | EX. 115 |
| GUM BASE | 19.2 | 25.5 | 25.5 | 25.5 | 40.0 |
| GLYCERIN | 1.7 | 1.7 | 6.7 | 6.7 | 1.7 |
| PALATINOSE CRYSTALLINE | 57.8 | 46.0 | 41.0 | 41.0 | 35.5 |
| PALATINOSE SYRUP* | 10.0 | 20.0 | 5.0 | - | 10.0 |
| POS | 10.0 | 5.0 | 20.0 | 25.0 | 10.0 |
| FLAVOR | 1.0 | 1.5 | 1.5 | 1.5 | 2.5 |
| APM | 0.3 | 0.3 | 0.3 | 0.3 | 0.3 |

| | | | | | |
|---|---|---|---|---|---|
| *Palatinose syrup may be preblended with glycerin and coevaporated to reduce moisture. | | | | | |

**TABLE 12**

| (WEIGHT PERCENT) | | | | | | |
|---|---|---|---|---|---|---|
| | EX. 116 | EX. 117 | EX. 118 | EX. 119 | EX. 120 | EX. 121 |
| GUM BASE | 25.5 | 25.5 | 25.5 | 25.5 | 50.0 | 70.0 |
| GLYCERIN | 1.7 | 1.7 | 6.7 | 14.7 | 1.6 | 0.6 |
| PALATINOSE CRYSTALLINE | 51.0 | 61.0 | 26.0 | 28.0 | 35.5 | 20.0 |
| PALATINOSE SYRUP* | 20.0 | 10.0 | 20.0 | - | 10.0 | 4.0 |
| POS | - | - | 20.0 | 30.0 | - | 2.0 |
| FLAVOR | 1.5 | 1.5 | 1.5 | 1.5 | 2.5 | 3.0 |
| APM | 0.3 | 0.3 | 0.3 | 0.3 | 0.4 | 0.4 |

| | | | | | | |
|---|---|---|---|---|---|---|
| *Palatinose syrup may be preblended with glycerin and coevaporated to reduce moisture. | | | | | | |

The formulation in Table 11 and 12 do not contain other sugars or alditols. These formulations will give unique texture and flavor attributes. These formulations may also contain other high-intensity, artificial sweeteners, from about 0.02% to about 0.1% for sweeteners like alitame, thaumatin, and dihydrochalcone, and from about 0.1% to about 0.3% for sweeteners like sucralose (Trade Mark), acesulfame, and saccharin. The formulations in Tables 11 and 12 without the other types of sugars and alditols will also have good non-cariogenic properties.

### EXAMPLES 122-125

The following gum formulations were made:

| | EX. 122 | EX. 123 | EX. 124 | EX. 125 |
|---|---|---|---|---|
| BASE | 27.0 | 27.0 | 27.0 | 27.0 |
| SORBITOL | 40.2 | 38.7 | 32.5 | 20.9 |
| MANNITOL | 12.0 | 11.5 | 9.7 | 6.3 |
| GLYCERIN | 8.1 | 8.1 | 8.1 | 8.1 |
| SORBITOL LIQUID | 11.0 | 11.0 | 11.0 | 11.0 |
| PEPPERMINT FLAVOR | 1.3 | 1.3 | 1.3 | 1.3 |
| COLOR | 0.1 | 0.1 | 0.1 | 0.1 |
| APM | 0.3 | 0.3 | 0.3 | 0.3 |
| PALATINOSE | 0 | 2.0 | 10.0 | 25.0 |

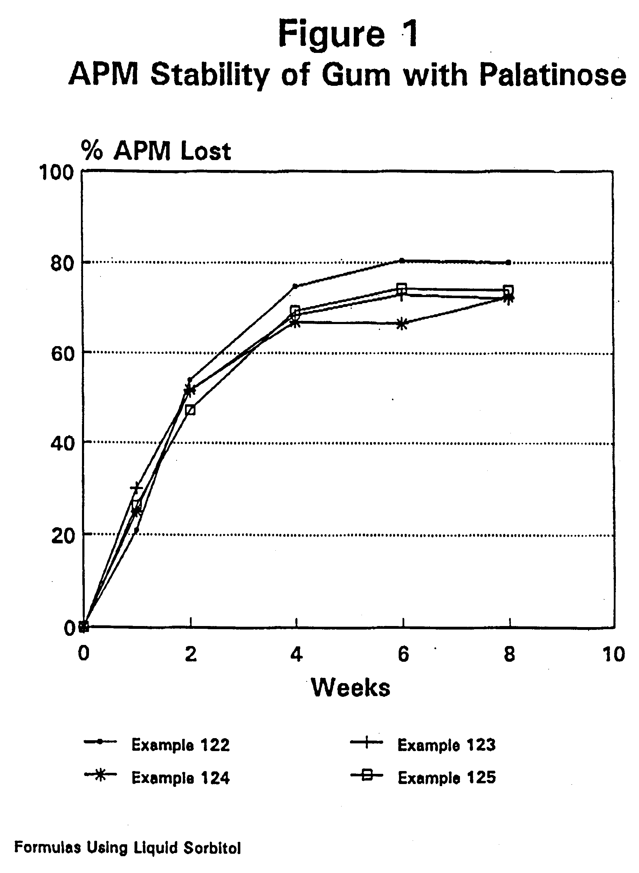

These formulas were made in a conventional lab mixer in a conventional manner on a lab scale and formed into square pellets. Samples of each formula were placed in six sealed pouches and stored at 29°C (85°F) for 0, 1, 2, 4, 6 and 8 weeks. Samples were then removed and analyzed for APM to determine degradation. The test results are shown in Figure 1. The test results show virtually no increase in stability of APM with palatinose levels as high as 25%.

### EXAMPLES 126-133

The following gum formulations were made:

| | EX. 126 | EX. 127 | EX. 128 | EX. 129 | EX. 130 | EX. 131 | EX. 132 | EX. 133 |
|---|---|---|---|---|---|---|---|---|
| BASE | 24.7 | 24.7 | 24.7 | 24.7 | 24.7 | 24.7 | 24.7 | 24.7 |
| SORBITOL | 50.0 | 50.0 | 35.0 | 10.0 | 35.0 | 10.0 | 35.0 | 10.0 |
| MANNITOL | 9.4 | 7.0 | 9.4 | 9.4 | 7.0 | 7.0 | 9.0 | 9.0 |
| GLYCERIN | 2.0 | 2.0 | 2.0 | 2.0 | 2.0 | 2.0 | 2.0 | 2.0 |
| LECITHIN | 0.2 | 0.2 | 0.2 | 0.2 | 0.2 | 0.2 | 0.2 | 0.2 |
| PEPPERMINT FLAVOR | 1.4 | 1.4 | 1.4 | 1.4 | 1.4 | 1.4 | 1.4 | 1.4 |
| APM | 0.3 | 0.3 | 0.3 | 0.3 | 0.3 | 0.3 | 0.3 | 0.3 |
| LYCASIN (Trade Mark) | - | 14.4 | - | - | 14.4 | 14.4 | - | - |
| LIQUID SORBITOL | 12.0 | - | 12.0 | 12.0 | - | - | - | - |
| POS | - | - | 15.0 | 40.0 | 15.0 | 40.0 | 15.0 | 40.0 |
| PALATINOSE SYRUP | - | - | - | - | - | - | 12.4 | 12.4 |

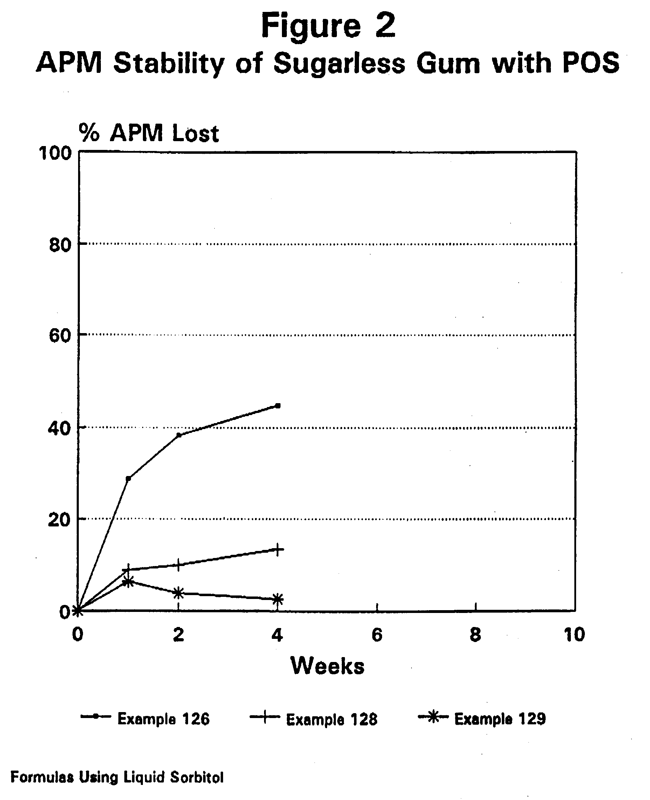

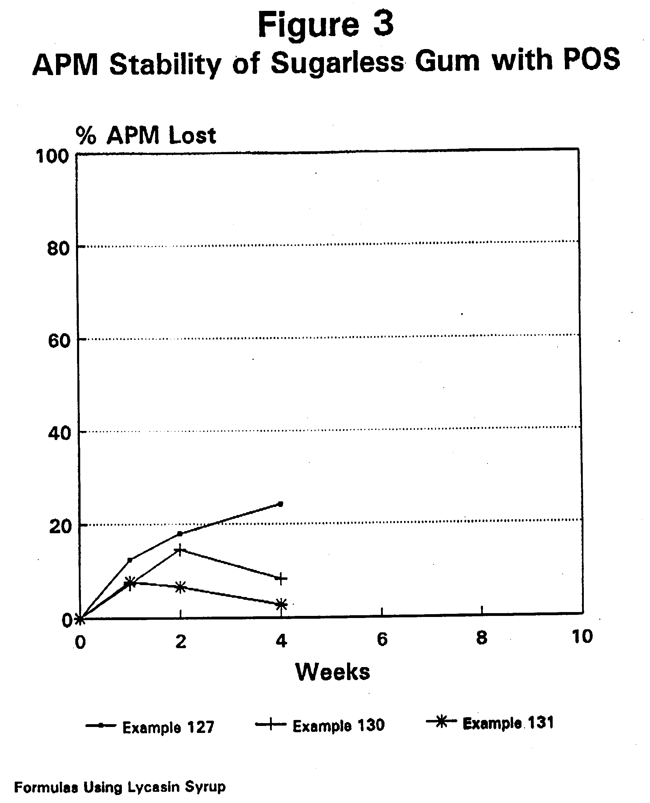

These formulas were made in a conventional lab mixer in a conventional manner and formed into square pellets. Samples of each formula were placed in four sealed pouches and stored at 85°F for 0, 1, 2, and 4 weeks. Samples were then removed and analyzed for APM to determine degradation. The test results are shown in Figures 2 and 3 for gum made with sorbitol liquid and Lycasin brand HSH syrup, respectively. Results show that in both types of formulations, POS improves APM stability significantly as compared to when palatinose is used in the same type of formulation in Figure 1. As seen in both Figures 2 and 3, after four weeks of storage at 29°C (85°F) over 80% of the originally formulated amount of aspartame remained undecomposed in the gum formulas that included POS.

### EXAMPLE 134

The following sugar gum center formulation was made:

| | % |
|---|---|
| Base | 24.8 |
| Sugar | 52.0 |
| Corn Syrup | 22.4 |
| Peppermint Flavor | 0.8 |

This formulation was made in a 94.6 litre (25 gallon) standard gum mixer and sheeted as rectangular pellets for coating tests.

Two starch solutions were prepared using 10% starch in an aqueous solution. In the first solution, Amylotex (Trade Mark) brand starch was used. Tex-O-Film (Trade Mark) brand starch was used in the second solution. Both starches are available from National Starch Co. and both are modified starches, with Tex-O-Film being a thin boiling starch. A coating syrup was prepared by mixing 1,000 grams of a 75% palatinose solution, heated until the palatinose dissolved, 120 grams of the 10% Amylotex solution and 120 grams of the 10% Tex-O-Film solution.

This syrup was used to coat 1000 grams of the above sugar pellets. The first two coats each used about 15 grams of coating syrup. These two coats made the gum very sticky. After each of the next 3-7 coats, about 4 grams of powdered palatinose was applied to dry each coat and reduce sticking. After this, coating with palatinose solution was similar to coating with a 75% sugar solution. Additional syrup coatings were added until the coating reached about 35% of the total product weight.

The final coated product had a hard, crunchy shell, very similar to a sucrose-type hard shell. The appearance was slightly grayer and slightly rougher. The flavor had a creamy character, but was much less sweet than a comparable sugar coating.

It should be appreciated that the compositions and methods of the present invention are capable of being incorporated in the form of a variety of embodiments, only a few of which have been illustrated and described above. The described embodiments are to be considered in all respects only as illustrative and not restrictive, and the scope of the invention, therefore, is indicated by the appended claims rather than by the foregoing description. All changes which come within the meaning and range of equivalency of the claims are to be embraced within their scope.

## Claims

1. A chewing gum composition comprising sweetness imparting amounts of unencapsulated aspartame and an effective amount of palatinose oligosaccharide to stabilize said aspartame against decomposition during storage at 29°C (85°F) for four weeks whereby at least 10% less aspartame decomposes into non-sweetening derivatives than would have decomposed if the palatinose oligosaccharide was not included in the gum composition.

2. A chewing gum composition as claimed in Claim 1 wherein the gum composition comprises at least 10% palatinose oligosaccharide.

3. A chewing gum composition as claimed in Claim 1 or Claim 2 wherein the gum composition comprises from 0.005 wt.% to 1 wt.% unencapsulated aspartame.

4. A chewing gum composition as claimed in any preceding claim wherein the palatinose oligosaccharide is effective such that after four weeks of storage at 29°F (85°F), over 80% of the unencapsulated aspartame originally formulated in the gum composition remains undecomposed.

5. A chewing gum composition as claimed in any preceding claim having a rolling compound comprising palatinose oligosaccharide or a mixture of palatinose oligosaccharide and palatinose applied to said composition.

6. A composition as claimed in Claim 5 wherein the palatinose oligosaccharide or mixture thereof comprise from 0.5 wt.% to 100 wt.% of the rolling compound.

7. A composition as claimed in Claim 5 wherein the palatinose oligosaccharide or mixture comprise from 0.005 wt.% to 5 wt.% of the chewing gum product.

8. A chewing gum composition as claimed in Claims 1 to 7 comprising:
a) from 5 wt.% to a 95 wt.% gum base;
b) from 0.1 wt.% to 10 wt.% of a flavouring agent;
c) from 5 wt.% to 90 wt.% bulking agent, the bulking agent comprising at least in part palatinose oligosaccharide.

9. A chewing gum composition as claimed in Claims 1 to 7 comprising:
a) from 5 wt.% to 95 wt.% gum base;
b) from 0.1 wt.% to 10 wt.% of a flavoring agent;
c) from 5 wt.% to 90 wt.% bulking agent, the bulking agent comprising at least in part palatinose oligosaccharide.

10. A chewing gum composition as claimed in Claims 1 to 9 wherein palatinose oligosaccharide is present in the form of an aqueous syrup.

11. A coated chewing gum product comprising a gum composition as claimed in any preceding claim said gum being in pellet form coated with a coating comprising palatinose oligosaccharide or a mixture of palatinose oligosaccharide and palatinose.

12. The coated chewing gum product of Claim 11 wherein the palatinose oligosaccharide or mixture comprise from 1 wt.% to 100 wt.% of the coating.

13. A coated chewing gum product as claimed in Claim 11 or Claim 12 wherein the coating comprises a hard shell coating.

14. A chewing gum product as claimed in any one of Claims 11 to 13 having a liquid center wherein the liquid center comprises palatinose, palatinose oligosaccharide or a mixture thereof.

15. A chewing gum composition comprising a high-intensity sweetener encapsulated with palatinose oligosaccharide.

16. A chewing gum composition comprising a flavor encapsulated with palatinose oligosaccharide.

17. A chewing gum product having a rolling compound comprising palatinose oligosaccharide or a mixture of palatinose oligosaccharide and palatinose.

18. A chewing gum product as claimed in claim 17 wherein the palatinose oligosaccharide or mixture comprises from 0.5 wt.% to 100 wt.% of the rolling compound.

19. A chewing gum product as claimed in claim 17 or claim 18 wherein the palatinose oligosaccharide or mixture in the rolling compound comprises from 0.005 to 5 wt.% of the chewing gum product.

20. A method of making a coated chewing gum product comprising the steps of:
a) providing a gum pellet containing aspartame;
b) applying a liquid coating syrup to the surface of the gum pellet, the coating syrup comprising palatinose oligosaccharide or a mixture of palatinose oligosaccharide and palatinose, and
c) solidifying the coating syrup,
whereby the amount of palatinose oligosaccharide or mixture of palatinose and palatinose oligosaccharide stabilizes said aspartame against decomposition during storage at 29°C (85°F) for four weeks whereby at least 10 wt.% less aspartame decomposes into non-sweetening derivatives than would have decomposed if the palatinose, palatinose oligosaccharide or mixture thereof were not included in the gum composition.

21. A method as claimed in Claim 20 wherein the coating syrup comprises a solution and the step of solidifying the coating comprises drying the solution.

22. A method as claimed in Claim 20 or Claim 21 wherein the coating syrup is applied in successive layers, with each layer of syrup being dried before application of an additional layer.

23. A method as claimed in Claims 20 to 22 wherein a powdered coating is applied after one or more of the syrup layers is applied.

24. The method of Claim 23 wherein the powdered coating comprises palatinose, palatinose oligosaccharide, maltodextrin, gelatin, cellulose derivative, starch, modified starch, vegetable gum, filler or mixtures thereof.

25. A method as claimed in Claims 20 to 24 wherein the coating syrup further comprises starch.

26. A method of making chewing gum comprising the steps of:
a) co-drying a solution containing palatinose, palatinose oligosaccharide or a mixture thereof and unencapsulated aspartame wherein the amount of palatinose, palatinose oligosaccharide or a mixture thereof stabilizes said aspartame against decomposition during storage at 29°C (85°F) for four weeks whereby at least 10% less aspartame decomposes into non-sweetening derivatives than would have decomposed if the palatinose, palatinose oligosaccharide or mixture thereof were not included in the gum composition;
b) mixing the co-dried sweeteners with gum base and flavouring agents to produce a gum composition.

27. A method of making chewing gum comprising the steps of:
a) co-evaporating an aqueous solution comprising palatinose, palatinose oligosaccharide or a mixture thereof and a plasticizing agent to form a syrup, and
b) mixing the syrup with gum base, bulking agents, aspartame and flavouring agents to produce a gum composition, wherein the amount of palatinose, palatinose oligosaccharide or a mixture thereof to stabilize said aspartame against decomposition during storage at 29°C (85°F) for four weeks whereby at least 10% less aspartame decomposes into non-sweetening derivatives than would have decomposed if the palatinose, palatinose oligosaccharide or mixture thereof were not included in the gum composition.

28. A method of Claim 27 wherein the plasticizing agent is selected from the group consisting of glycerin, propylene glycol and mixtures thereof.

29. A method as claimed in Claims 20 to 28 wherein the product is non-cariogenic.

30. A method as claimed in Claims 20 to 29 wherein the product is free of polyols.

31. Use of palatinose, palatinose oligosaccharide or a mixture thereof to stabilize aspartame against decomposition in a chewing gum during storage.

32. Use of palatinose, palatinose oligosaccharide or a mixture thereof as claimed in claim 31 wherein sufficient palatinose, palatinose oligosaccharide or a mixture thereof is included such that when stored at 29°C (85°F) for four weeks at least 10 wt.% less aspartame decomposes into non-sweetening derivatives than could have been decomposed if the palatinose, palatinose oligosaccharide or mixture therefore were not included in the gum composition.

## Patentansprüche

1. Kaugummi-Zusammensetzung, die einen süßen Geschmack verleihende Mengen an nicht-eingekapseltem Aspartam und eine zur Stabilisierung des genannten Aspartams gegen Zersetzung während einer vierwöchigen Lagerung bei 29°C (85°F) wirksame Menge Palatinose-Oligosacchard enthält, so daß mindestens 10 % Weniger Aspartam zu keinen süßen Geschmack verleihenden Derivaten zersetzt werden als zersetzt werden würden, wenn das Palatinose-Oligosaccharid in der Kaugummi-Zusammensetzung nicht enthalten wäre.

2. Kaugummi-Zusammensetzung nach Anspruch 1, die mindestens 10 % Palatinose-Oligosaccharid enthält.

3. Kaugummi-Zusammensetzung nach Anspruch 1 oder 2, die 0,005 bis 1 Gew.-% nicht-eingekapseltes Aspartam enthält.

4. Kaugummi-Zusammensetzung nach einem der vorhergehenden Ansprüche, in der das Palatinose-Oligosacchard wirksam ist, so daß nach vierwöchiger Lagerung bei 29°C (85°F) mehr als 80 % des nicht-eingekapselten Aspartams, das ursprünglich in der Kaugummi-Zusammensetzung enthalten war, unzersetzt bleiben.

5. Kaugummi-Zusammensetzung nach einem der vorhergehenden Ansprüche, die eine Auswalz(Ausroll)- bzw. Puder-Verbindung(Mischung) aus Palatinose-Oligosaccharid oder einer Mischung von Palatinose-Oligosaccharid und Palatinose, aufgebracht auf die Zusammensetzung, enthält.

6. Zusammensetzung nach Anspruch 5, in der das Palatinose-Oligosaccharid oder die Mischung davon 0,5 bis 100 Gew.-% der Auswalz(Ausroll)Verbindung umfaßt.

7. Zusammensetzung nach Anspruch 5, in der das Palatinose-Oligosaccharid oder die Mischung davon 0,005 bis 5 Gew.-% des Kaugummi-Produkts ausmacht.

8. Kaugummi-Zusammensetzung nach den Ansprüchen 1 bis 7, die umfaßt:
a) 5 bis 95 Gew.-% Kaugummibase;
b) 0,1 bis 10 Gew.-% eines Aromastoffes (Geschmacksbildners);
c) 5 bis 90 Gew.-% Quellmittel, das mindestens zum Teil aus Palatinose-Oligosaccharid besteht.

9. Kaugummi-Zusammensetzung nach den Ansprüchen 1 bis 7, die umfaßt:
a) 5 bis 95 Gew.-% Kaugummibase;
b) 0,1 bis 10 Gew.-% eines Aromastoffes (Geschmacksbildners);
c) 5 bis 90 Gew.-% Quellmittel, das mindestens zum Teil aus Palatinose-Oligosaccharid besteht.

10. Kaugummi-Zusammensetzung nach den Ansprüchen 1 bis 9, in der das Palatinose-Oligosaccharid in Form eines wäßrigen Sirups vorliegt.

11. Beschichtetes Kaugummi-Produkt, das eine Kaugummi-Zusammensetzung nach einem der vorhergehenden Ansprüche umfaßt und in Pellet-Form vorliegt, die mit einem Überzug versehen ist, der Palatinose-Oligosaccharid oder eine Mischung von Palatinose-Oligosaccharid und Palatinose umfaßt.

12. Beschichtetes Kaugummi-Produkt nach Anspruch 11, bei dem das Palatinose-Oligosaccharid oder die Mischung davon 1 bis 100 Gew.-% des Überzugs ausmacht.

13. Beschichtetes Kaugummi-Produkt nach Anspruch 11 oder 12, bei dem der Überzug einen harten Hüllen-Überzug darstellt.

14. Kaugummi-Produkt nach einem der Ansprüche 11 bis 13, das ein flüssiges Zentrum aufweist, das Palatinose, Palatinose-Oligosaccharid oder eine Mischung davon enthält.

15. Kaugummi-Zusammensetzung, die ein Süßungsmittel mit hoher Süßkraft, eingekapselt in Palatinose-Oligosaccharid, enthält.

16. Kaugummi-Zusammensetzung, die einen Aromastoff (Geschmacksbildner), eingekapselt in Palatinose-Oligosaccharid, enthält.

17. Kaugummi-Produkt mit einer Auswalz(Ausroll)-Verbindung, die Palatinose-Oligosaccharid oder eine Mischung von Palatinose-Oligosaccharid und Palatinose umfaßt.

18. Kaugummi-Produkt nach Anspruch 17, bei dem das Palatinose-Oligosaccharid oder die Mischung davon 0,5 bis 100 Gew.-% der Auswalz(Ausroll)-Verbindung ausmacht.

19. Kaugummi-Produkt nach Anspruch 17 oder 18, bei dem das Palatinose-Oligosaccharid oder die Mischung davon in der Auswalz(Ausroll)-Verbindung 0,005 bis 5 Gew.-% des Kaugummi-Produkts ausmacht.

20. Verfahren zur Herstellung eines beschichteten Kaugummi-Produkts, das die folgenden Stufen umfaßt:
a) Herstellung eines Kaugummi-Pellets, das Aspartam enthält;
b) Aufbringen eines flüssigen Beschichtungssirups auf die Oberfläche des Kaugummipellets, wobei der Beschichtungssirup Palatinose-Oligosaccharid oder eine Mischung von Palatinose-Oligosacchard und Palatinose umfaßt, und
c) Erstarrenlassen des Beschichtungssirups,
wobei die Menge des Palatinose-Oligosaccharids oder der Mischung von Palatinose und Palatinose-Oligosaccharid das Aspartam während einer vierwöchigen Lagerung bei 29°C (85°F) gegen Zersetzung stabilisiert, so daß mindestens 10 Gew.-% Weniger Aspartam zu keinen süßen Geschmack verleihenden Derivaten zersetzt werden als zersetzt würden, wenn die Palatinose, das Palatinose-Oligosaccharid oder eine Mischung davon in der Kaugummi-Zusammensetzung nicht enthalten wäre.

21. Verfahren nach Anspruch 20, bei dem der Beschichtungssirup eine Lösung umfaßt und die Stufe der Verfestigung (Erstarrung) des Überzugs das Trocknen der Lösung umfaßt.

22. Verfahren nach Anspruch 20 oder 21, bei dem der Beschichtungssirup in aufeinanderfolgenden Schichten aufgebracht wird, wobei jede Sirup-Schicht vor dem Aufbringen einer weiteren Schicht getrocknet wird.

23. Verfahren nach den Ansprüchen 20 bis 22, bei dem ein pulverförmiger Überzug nach einer oder mehren Sirupschichten aufgebracht wird.

24. Verfahren nach Anspruch 23, bei dem der pulverförmige Überzug Palatinose, Palatinose-Oligosacchard, Maltodextrin, Gelatine, Cellulose-Derivat, Stärke, modifizierte Stärke, Pflanzengummi, Füllstoff oder Mischungen davon enthält.

25. Verfahren nach den Ansprüchen 20 bis 24, bei dem der Beschichtungssirup außerdem Stärke umfaßt.

26. Verfahren zur Herstellung eines Kaugummis, das die folgenden Stufen umfaßt:
a) gemeinsames Trocknen einer Lösung, die enthält Palatinose, Palatinose-Oligosacchard oder eine Mischung davon und ein nichteingekapseltes Aspartam, wobei die Menge an Palatinose, Palatinose-Oligosaccharid oder einer Mischung davon das genannte Aspartam während einer vierwöchigen Lagerung bei 29°C (85°F) gegen Zersetzung stabilisiert, so daß mindestens 10 % weniger Aspartam zu keinen süßen Geschmack verleihenden Derivaten zersetzt werden als zersetzt würden, wenn die Palatinose, das Palatinose-Oligosaccharid oder eine Mischung davon in der Kaugummi-Zusammensetzung nicht enthalten wären;
b) Mischen der gemeinsam getrockneten Süßungsmittel mit der Kaugummibase und den Aromastoffen (Geschmacksbildnern) unter Bildung einer Kaugummi-Zusammensetzung.

27. Verfahren zur Herstellung eines Kaugummis, das die folgenden Stufen umfaßt:
a) gemeinsames Eindampfen einer wäßrige Lösung, die enthält Palatinose, Palatinose-Oligosaccharid oder eine Mischung davon und ein Plastifizierungsmittel unter Bildung eines Sirups und
b) Mischen des Sirups mit der Kaugummibase, mit Quellungsmitteln, Aspartam und Aromastoffen (Geschmacksbildnern) unter Bildung einer Kaugummi-Zusammensetzung, wobei die Menge an Palatinose, Palatinose-Oligosaccharid oder einer Mischung davon ausreicht zur Stabilisierung des Aspartams gegen Zersetzung während einer vierwöchigen Lagerung bei 29°C (85°F), so daß mindestens 10 % weniger Aspartam zersetzt werden zu keinen süßen Geschmack verleihenden Derivaten als zersetzt würden, wenn die Palatinose, das Palatinose-Oligosaccharid oder eine Mischung davon in der Kaugummi-Zusammensetzung nicht vorhanden wäre.

28. Verfahren nach Anspruch 27, bei dem das Plastifizierungsmittel ausgewählt wird aus der Gruppe, die besteht aus Glycerin, Propylenglycol und Mischungen davon.

29. Verfahren nach den Ansprüchen 20 bis 28, bei dem das Produkt nichtkariogen ist.

30. Verfahren nach den Ansprüchen 20 bis 29, bei dem das Produkt frei von Polyolen ist.

31. Verwendung von Palatinose, Palatinose-Oligosaccharid oder einer Mischung davon zur Stabilisierung von Aspartam gegen Zersetzung in einem Kaugummi während der Lagerung.

32. Verwendung von Palatinose, Palatinose-Oligosaccharid oder einer Mischung davon nach Anspruch 31, wobei genügend Palatinose, Palatinose-Oligosaccharid oder einer Mischung davon verwendet werden, so daß bei vierwöchiger Lagerung bei 29°C (85°F) mindestens 10 Gew.-% weniger Aspartam zu keinen süßen Geschmack verleihenden Derivaten zersetzt werden als zersetzt würden, wenn die Palatinose, das Palatinose-Oligosaccharid oder eine Mischung davon in der Kaugummi-Zusammensetzung nicht enthalten wäre.

## Revendications

1. Composition de gomme à mâcher comprenant de l'aspartame non encapsulé en des quantités conférant un goût sucré et un oligosaccharide de palatinose en quantité efficace pour stabiliser ledit aspartame contre une décomposition pendant un stockage à 29°C (85°F) pendant quatre semaines, moyennant quoi la quantité d'aspartame qui se décompose en dérivés non édulcorants est inférieure d'au moins 10 % en poids à la quantité qui se décomposerait si l'oligosaccharide de palatinose n'était pas inclus dans la composition de gomme.

2. Composition de gomme à mâcher selon la revendication 1, comprenant au moins 10 % d'oligosaccharide de palatinose.

3. Composition de gomme à mâcher selon la revendication 1 ou 2, comprenant de 0,005 % en poids à 1 % en poids d'aspartame non encapsulé.

4. Composition de gomme à mâcher selon l'une quelconque des revendications précédentes, dans laquelle l'oligosaccharide de palatinose est efficace de telle façon qu'après quatre semaines de stockage à 29°C (85°F), plus de 80 % de l'aspartame non encapsulé formulé à l'origine dans la composition de gomme restent à l'état non décomposé.

5. Composition de gomme à mâcher selon l'une quelconque des revendications précédentes, contenant un composé de laminage comprenant un oligosaccharide de palatinose ou un mélange d'oligosaccharide de palatinose et de palatinose appliqué sur ladite composition.

6. Composition selon la revendication 5, dans laquelle l'oligosaccharide de palatinose ou le mélange à base de celui-ci constitue de 0,5 % en poids à 100 % en poids du composé de laminage.

7. Composition selon la revendication 5, dans laquelle l'oligosaccharide de palatinose ou le mélange à base de celui-ci constitue de 0,005 % en poids à 5 % en poids du produit gomme à mâcher.

8. Composition de gomme à mâcher selon les revendications 1 à 7, comprenant :
a) de 5 % en poids à 95 % en poids de base de gomme ;
b) de 0,1 % en poids à 10 % en poids d'agent aromatisant ;
c) de 5 % en poids à 90 % en poids d'agent de charge, ledit agent de charge étant constitué au moins en partie d'oligosaccharide de palatinose.

9. Composition de gomme à mâcher selon les revendications 1 à 7, comprenant :
a) de 5 % en poids à 95 % en poids de base de gomme ;
b) de 0,1 % en poids à 10 % en poids d'agent aromatisant ;
c) de 5 % en poids à 90 % en poids d'agent de charge, ledit agent de charge étant constitué au moins en partie d'oligosaccharide de palatinose.

10. Composition de gomme à mâcher selon les revendications 1 à 9, dans laquelle l'oligosaccharide de palatinose est présent sous la forme d'un sirop aqueux.

11. Produit gomme à mâcher enrobée comprenant une composition de gomme selon l'une quelconque des revendications précédentes, ladite gomme ayant la forme de granules enrobés d'un enrobage comprenant un oligosaccharide de palatinose ou un mélange d'oligosaccharide de palatinose et de palatinose.

12. Produit gomme à mâcher enrobée selon la revendication 11, dans lequel l'oligosaccharide de palatinose ou le mélange à base d'oligosaccharide de palatinose constitue de 1 % en poids à 100 % en poids de l'enrobage.

13. Produit gomme à mâcher enrobée selon la revendication 11 ou la revendication 12, dans lequel l'enrobage est constitué par un enrobage sous la forme d'une enveloppe dure.

14. Produit gomme à mâcher selon l'une quelconque des revendications 11 à 13, ayant une partie centrale liquide constituée de palatinose, d'oligosaccharide de palatinose ou d'un mélange de ceux-ci.

15. Composition de gomme à mâcher comprenant un édulcorant d'intensité élevée encapsulé avec un oligosaccharide de palatinose.

16. Composition de gomme à mâcher comprenant un arôme encapsulé avec un oligosaccharide de palatinose.

17. Produit gomme à mâcher ayant un composé de laminage comprenant un oligosaccharide de palatinose ou un mélange d'oligosaccharide de palatinose et de palatinose.

18. Produit gomme à mâcher selon la revendication 17, dans lequel l'oligosaccharide de palatinose ou le mélange à base d'oligosaccharide de palatinose constitue de 0,5 % en poids à 100 % en poids du composé de laminage.

19. Produit gomme à mâcher selon la revendication 17 ou la revendication 18, dans lequel l'oligosaccharide de palatinose ou le mélange à base d'oligosaccharide de palatinose dans le composé de laminage constitue de 0,005 % à 5 % en poids du produit gomme à mâcher.

20. Procédé de fabrication d'un produit gomme à mâcher enrobée, comprenant les étapes consistant à :
a) fournir des granules de gomme contenant de l'aspartame ;
b) appliquer un sirop liquide d'enrobage sur la surface des granules de gomme, ledit sirop d'enrobage comprenant un oligosaccharide de palatinose ou un mélange d'oligosaccharide de palatinose et de palatinose ; et
c) solidifier le sirop d'enrobage,
grâce à quoi la quantité d'oligosaccharide de palatinose ou de mélange de palatinose et d'oligosaccharide de palatinose stabilise ledit aspartame contre une décomposition pendant un stockage à 29°C (85°F) pendant quatre semaines, moyennant quoi la quantité d'aspartame qui se décompose en dérivés non édulcorants est inférieure d'au moins 10 % en poids à la quantité qui se décomposerait si le palatinose, l'oligosaccharide de palatinose ou un mélange de ceux-ci n'était pas inclus dans la composition de gomme.

21. Procédé selon la revendication 20, dans lequel le sirop d'enrobage est constitué d'une solution, et l'étape de solidification de l'enrobage consiste en un séchage de la solution.

22. Procédé selon la revendication 20 ou la revendication 21, dans lequel le sirop d'enrobage est appliqué en couches successives, chaque couche de sirop étant séchée avant l'application d'une couche supplémentaire.

23. Procédé selon les revendications 20 à 22, dans lequel on applique un enrobage pulvérulent après avoir appliqué une ou plusieurs couches de sirop.

24. Procédé selon la revendication 23, dans lequel l'enrobage pulvérulent est constitué de palatinose, d'oligosaccharide de palatinose, de maltodextrine, de gélatine, d'un dérivé cellulosique, d'amidon, d'amidon modifié, d'une gomme végétale, d'une charge, ou de mélanges de ceux-ci.

25. Procédé selon les revendications 20 à 24, dans lequel le sirop d'enrobage comprend, en outre, de l'amidon.

26. Procédé de fabrication d'une gomme à mâcher, comprenant les étapes consistant à :
a) co-sécher une solution contenant du palatinose, un oligosaccharide de palatinose ou un mélange de ceux-ci, et de l'aspartame non encapsulé, dans laquelle la quantité de palatinose, d'oligosaccharide de palatinose ou d'un de leurs mélanges stabilise ledit aspartame contre une décomposition pendant un stockage à 29°C (85°F) pendant quatre semaines, moyennant quoi la quantité d'aspartame qui se décompose en dérivés non édulcorants est inférieure d'au moins 10 % à la quantité qui se décomposerait si le palatinose, l'oligosaccharide de palatinose ou le mélange de ceux-ci n'était pas inclus dans la composition de gomme ;
b) mélanger les édulcorants co-séchés avec une base de gomme et des agents aromatisants pour produire une composition de gomme.

27. Procédé de fabrication d'une gomme à mâcher, comprenant les étapes consistant à :
a) co-évaporer une solution aqueuse comprenant du palatinose, un oligosaccharide de palatinose ou un mélange de ceux-ci, et un agent plastifiant, pour former un sirop ; et
b) mélanger le sirop avec une base de gomme, des agents de charge, de l'aspartame et des agents aromatisants pour produire une composition de gomme, la quantité de palatinose, d'oligosaccharide de palatinose ou de mélange de ceux-ci stabilisant ledit aspartame contre une décomposition pendant un stockage à 29°C (85°F) pendant quatre semaines, moyennant quoi la quantité d'aspartame qui se décompose en dérivés non édulcorants est inférieure d'au moins 10 % à la quantité qui se décomposerait si le palatinose, l'oligosaccharide de palatinose ou le mélange de ceux-ci n'était pas inclus dans la composition de gomme.

28. Procédé selon la revendication 27, dans lequel l'agent plastifiant est choisi dans l'ensemble constitué par le glycérol, le propylèneglycol et des mélanges de ceux-ci.

29. Procédé selon les revendications 20 à 28, dans lequel le produit est non-cariogène.

30. Procédé selon les revendications 20 à 29, dans lequel le produit est dépourvu de polyols.

31. Utilisation de palatinose, d'oligosaccharide de palatinose ou d'un mélange de ceux-ci pour stabiliser l'aspartame contre une décomposition dans une gomme à mâcher pendant le stockage.

32. Utilisation de palatinose, d'oligosaccharide de palatinose ou d'un mélange de ceux-ci selon la revendication 31, le palatinose, l'oligosaccharide de palatinose ou un mélange de ceux-ci étant inclus en quantité suffisante pour que, pendant un stockage à 29°C (85°F) pendant quatre semaines, la quantité d'aspartame qui se décompose en dérivés non édulcorants soit inférieure d'au moins 10 % en poids à la quantité qui se décomposerait si le palatinose, l'oligosaccharide de palatinose ou le mélange de ceux-ci n'était pas inclus dans la composition de gomme.
